# EUROPEAN PATENT SPECIFICATION

(11) **EP 3 597 082 B1**
(45) Date of publication and mention of the grant of the patent: **17.02.2021**
(21) Application number: 18722253.4
(22) Date of filing: 16.03.2018
(51) Int. Cl.: A47J 31/44, A47J 31/06, A47J 31/36, A47J 31/40

(54) **BEVERAGE PREPARATION DEVICE HAVING A COMPACT STRUCTURE AND METHOD FOR OPERATING SAID DEVICE**
KOMPAKTER GETRÄNKEAUTOMAT UND METHODE ZUR VERWENDUNG DES GETRÄNKEAUTOMATEN
APPAREIL DE PRÉPARATION DE BOISSONS À STRUCTURE COMPACTE ET PROCÉDÉ DE FONCTIONNEMENT DUDIT APPAREIL

(30) Priority: 17.03.2017 PT 2017109976
(43) Date of publication of application: 22.01.2020
(73) Proprietor: Novadelta-Comércio e Industria de Cafés, Lda., 1950-041 Lisboa (PT)
(72) Inventor: NABEIRO, Rui Miguel, 7370-112 Campo Maior (PT); MEDINA MUNDT, Jesús, 1800-098 Lisboa (PT)
(74) Representative: Ferreira Pinto, Francisca
(86) International application number: PCT/PT2018/050010
(87) International publication number: WO 2018/169426

(56) References cited:
- WO-A1-2011/067264
- WO-A1-2015/173125
- WO-A2-2005/002405
- WO-A2-2010/091872

## Description

### Field of the invention

The present invention refers to the field of apparatus for preparing beverages by means of injection of a pressurized fluid flow upon a single portion of respective edible substance collected in a respective portion collection device.

The present invention further refers to a process of operation of an apparatus for preparing beverages do the aforementioned type.

### Background of the invention

The prior art presents several solutions relating to brewing devices adapted for collecting single portions of a beverage precursor substance.

The documents EP 2497395 B1 and WO 2012/158055 A1 registered by the author, disclose brewing devices comprised in beverage preparation apparatus of the type of the present invention. These devices present a closing disposition including a closing element provided in the manner of a lever so that can move a collection disposition adapted for collecting a single portion, in a swiveling movement around a reference swivel axis, between an open position where can collect a single portion, and a closed position, and vice-versa.

The document EP 1781153 B1 discloses a beverage preparation device whereby the closing disposition is provided so that when in a closed position, a free edge is oriented to the posterior zone of the apparatus. In this case the closing disposition is provided as a piece independent from the collection disposition that is provided so that can be driven in a translation movement. Moreover, the closing disposition is provided so that does not move together with the beverage discharge disposition.

The prior art further presents solutions relating to portable systems of beverage distribution.

The document EP 0366444 B1 discloses a system of distribution of cold and hot beverages, configured with a general shape of a backpack. Said system comprises fluid pressurization means provided in the backpack-like part and connected by means of a pipe to respective beverage discharge means. In particular, said system presents pumping means that are manually operated, whereby a respective handle is mounted adjacent to the edge of discharge of cups dispensing means. Said system further presents a manual discharge disposition provided distanced from said pumping actuation handle.

The documents WO 95/11853 and EP 1699732 B1 disclose other beverage distribution systems of the same type.

The document WO 2005/002405 A2 discloses an espresso machine that includes a single portion collection device associated in a joint disposition with an actuation element, of the lever type, of said collection device. In this case, the coffee machine and said actuation element do not present a compact form, adapted so that can be handheld. Moreover, the actuation element is configured so that can be actuated from a front position in relation to said espresso coffee machine.

The document 2010/091872 A2 discloses a pre-packaged portion of grind coffee and espresso coffee machine for using said pre-packed portion. Also in this case, the apparatus is not configured so that can be handheld, and the actuation element does not provide the advantages of ergonomic use disclosed by the present invention.

### General description of the invention

The objective of the present invention is to provide a beverage preparation apparatus including for example espresso type coffee, and other aromatic beverages such as tea and similar, by means of mixture of a pressurized fluid flow with a single portion of edible substance that is supplied, for example inside of a capsule, to a collection disposition of single portion, and that said apparatus presents a compact and ergonomic construction that simplifies the actuation of said collection disposition of single portion, in particular adapted so that said apparatus is portable and, preferentially, can be held and operated with a same hand, in the form of compact apparatus, for example of the recipient type, or transported, for example in the form of backpack, or trolley, so that said apparatus is portable and, preferentially held and operated with a same hand, in the form of a compact apparatus, for example of the recipient type, or transported, for example in the form of backpack, or trolley, along a given path with autonomy relative to external energy sources.

In particular, it is objective of the present invention to provide an apparatus that presents a particularly compact form, adapted for being handheld, and so that at least the opening of the single portion collection disposition can be driven by the same hand that holds the apparatus.

This objective is achieved according to the present invention by means of a beverage preparation apparatus according to claim 1. Preferred embodiments are disclosed on dependent claims.

It is preferred when the beverage preparation apparatus is adapted so that can operate in portable conditions, in particular in what refers to the configuration of a first and second support casing provided remote and in fluid connection, whereby said first support casing comprises the portion collection disposition and said support casing comprises a fluid supply source.

It is preferred when said fluid supply source is provided in a remote second support structure that is provided in fluid communication with said first support structure and said portion collection disposition by means of at least one first fluid line, preferentially also of a second fluid line.

It is preferred when said fluid supply source comprises:
- fluid storage means adapted so that provide storage of a given fluid quantity, preferentially fluid storage means adapted so as to maintain a fluid temperature between 60 and 100 °C during a previously defined operation period;
- optionally, fluid heating means adapted so that can supply a fluid flow at a temperature comprised between 60 and 100 °C, preferentially between 80 e 90 °C;
- fluid pressurization means adapted so that can supply a fluid flow at a pressure comprised between 1 and 20 bar, preferentially between 5 and 15 bar,
- fluid connection means adapted so as to provide fluid connection between said fluid supply components, and adapted for connection with the first fluid line connected with means for injection of pressurized fluid into the portion collection disposition.

It is preferred when said fluid supply source is provided with energy autonomy so that said beverage preparation device can be operated without a function energy connection to an external source and, preferentially, can be transported along a given distance in operating conditions in autonomous manner relative to external energy sources, whereby said fluid supply source preferentially comprises energy storage means and said fluid pressurization means are preferentially provided as a compressed gas recipient.

It is preferred when said fluid supply source further presents transport, adapted so as to provide their transport on the back of an individual, such as for example in manner of a backpack, or to provide its displacement by an individual, such as for example in manner of a vehicle.

Another objective of the present invention is to provide a process of preparing beverages that provides better conditions of ergonomic use and portability.

This objective is solved by means of a process according to claim 13.

Preferred embodiments are disclosed on the dependent claims.

It is preferred when the process according to the invention includes a step of actuation of start of supply of a pressurized fluid flow to said portion collection disposition, whereby said step of actuation does not include the supply of energy from an energy source external to said apparatus.

It is preferred when the step of start of supply of a pressurized fluid flow to said portion collection disposition includes the actuation of an actuation device, whereby said actuation device is preferentially provided with a button arranged in a region of a first support structure below of said beverage discharge disposition.

It is preferred when said step of providing a beverage preparation apparatus includes handholding said apparatus with a hand.

It is preferred when said step of providing a beverage preparation apparatus includes holding a first support structure of said apparatus with a hand, and a second support structure of said apparatus is not held with a hand but is provided portable, or associated with transport means.

### Description of the Figures

The invention shall hereinafter be explained in greater detail based upon preferred embodiments and the attached Figures.

The Figures show, in simplified schematic representations:
- Figure 1:: side-view of a first embodiment of an apparatus (1) for preparing beverages according to the present invention, in a closed position;
- Figure 2:: side-view of a first embodiment of an apparatus (1) for preparing beverages according to the present invention, in an open position;
- Figure 3:: side-view of a second embodiment of an apparatus (1) for preparing beverages according to the present invention, in a closed position;
- Figure 4:: side-view of a second embodiment of an apparatus (1) for preparing beverages according to the present invention, in an open position;
- Figure 5:: side-view of another embodiment of an apparatus (1) for preparing beverages according to the present invention, according to Figures 1 and 2, including a remote fluid supply source;
- Figure 6:: side-view of another embodiment of an apparatus (1) for preparing beverages according to the present invention, according to Figures 3 and 4, including a remote fluid supply source.

### Detailed description of the invention

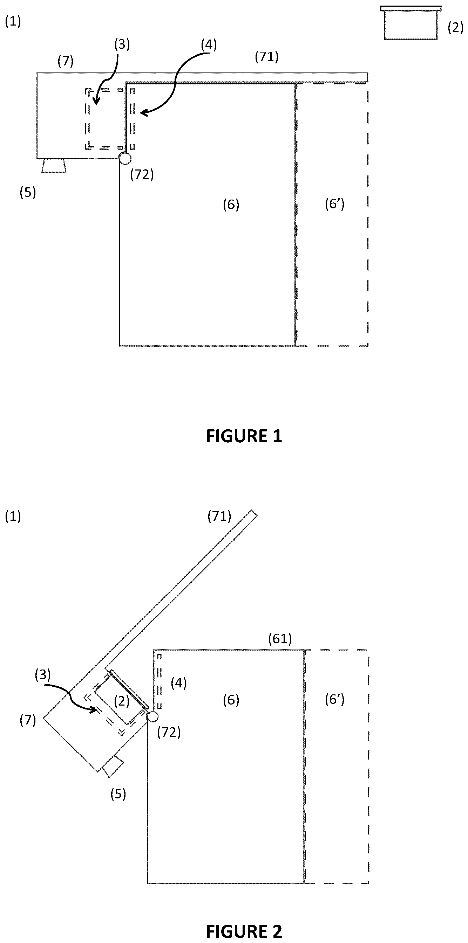

As represented in both embodiments (**Figures 1** and **2**, and **Figures 3** and **4**, respectively), the beverage preparation apparatus (1) according to the present invention comprises a portion collection disposition (3) adapted for collection of said single portion (2) when in a open position, and disposed downstream of a fluid injection disposition (4) and upstream of a beverage discharge disposition (5), a first support structure (6) provided stationary, presenting a posterior region adapted for connection to said fluid supply source (11), and a front region adapted for supporting said portion collection disposition (3).

It is preferred when said portion collection disposition (3) presents a cup-like or similar general shape, whereby the opening and interior surface of cup is adapted for collecting single portions (2) with a sidewall adjusted to the shape thereof. Moreover, said portion collection disposition (3), when in a respective closed position, is confined upstream by a stationary top wall that presents said fluid injection disposition (4) that is provided in fluid connection with said fluid supply source (11) upstream, and is confined downstream by a base wall that presents beverage discharge means provided in fluid connection with said beverage discharge disposition (5).

Moreover, said apparatus (1) further comprises a closing disposition (7) adapted so that provides the movement of opening and closing of said portion collection disposition (3) by means of a closing element (71) presenting an elongated form with a free edge and provided so that can be swiveled around a reference swiveling axis (72), between an open position where releases passage for introduction of said single portion (2) in said portion collection disposition (3), and a closed position where provides close of said portion collection disposition (3) in liquid-tight manner.

According to an inventive aspect of said apparatus (1), said closing element (71) is provided so that said free edge is oriented backwards and can be moved around a reference swivel axis (72) disposed in a frontal region and below the top region of said first support structure (6). It thus advantageously results that said closing disposition (7) can be opened by means of a movement corresponding to swiveling of said closing element (71) from a substantially horizontal and backwards-oriented direction, to a substantially vertical direction and oriented upwards on a frontal region of said apparatus (1), corresponding to the open position, and can be closed by means of a reverse movement.

The actuation of said closing disposition (7) therefore results in a swivel movement of the closing element (71) from a substantially horizontal direction and backwards-oriented free edge, in the top region of said apparatus (1), corresponding to the closed position, to a substantially vertical direction and upwards-oriented free edge, at a frontal region of said apparatus (1), and vice-versa.

Moreover, said reference swivel axis (72) is disposed below a top region of said first support structure (6), so that said closing element (71) can be swiveled around said reference swivel axis (72) from a top region of said first support structure (6) to a frontal region thereof.

It is further preferred when said reference swivel axis (72) is disposed below the level of said portion collection disposition (3) of said first support structure (6), so that the free edge of said closing element (71) can be swiveled in an angle smaller than 100°, preferentially of approximately 90°, around said reference swivel axis (72), from a posterior region of said support structure (6) to a frontal region thereof.

As represented, it is preferred when said closing element (71) is configured so that, when in the closed position, develops along at least most part, preferentially the entire top region of envelope casing (61) of said first support structure (6).

According to an inventive aspect, said closing disposition (7) is further adapted so that can only carry out a swivel movement, and configured so that at least one of said portion collection disposition (3) and said beverage discharge disposition (4), is moved between respective initial and final positions together with the swiveling movement of said closing element (71).

It is herewith provided a compact construction of the ensemble formed by the closing disposition (7), portion collection disposition (3) and discharge disposition (5), as well as an ergonomic operative disposition of these components.

In particular, in the case of a first embodiment of apparatus (1) according to the present invention (**Figures 1** and **2**), said closing element (71) is provided in a joint construction, without movement transmission elements, with said portion collection disposition (3) and beverage discharge disposition (4).

It is preferred when said closing element (71) is provided in a single piece with said portion collection disposition (3), so that when said portion collection disposition (3) is in an open position, the respective opening for introduction of single portion (2) is oriented substantially upwards.

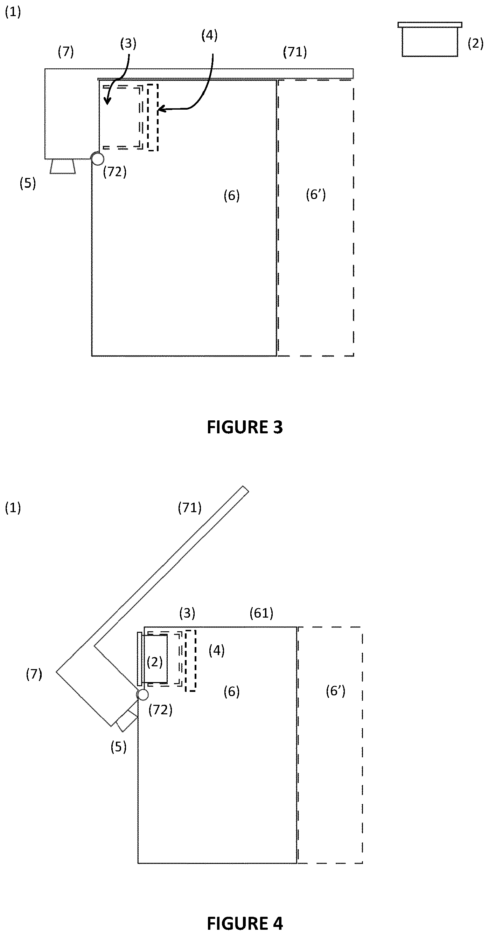

Alternatively, as in the case of the second embodiment of apparatus (1) according to the present invention (**Figures 3** and **4**), said closing element (71) can be provided in a single piece with said beverage discharge disposition (4), whereby said reference swivel axis (72) is disposed in a upstream region of said beverage discharge disposition (4).

It is further preferred when said first support structure (6) presents a respective envelope casing (61), whereby said closing element (71) is preferentially configured so that, when in the closed position, results adjacent to said envelope casing (61) or in the continuation of the exterior surface thereof and projecting beyond the edge of respective posterior region.

It is particularly preferred when said first support structure (6) presents a respective envelope casing (61) adapted so that can be held by a hand, preferentially configured in form of bottle, recipient, handle or similar.

In the case of the represented embodiments, the apparatus (1) presents a second support structure (6') adapted at least for fluid storage and provided in fluid connection with said first support structure (6).

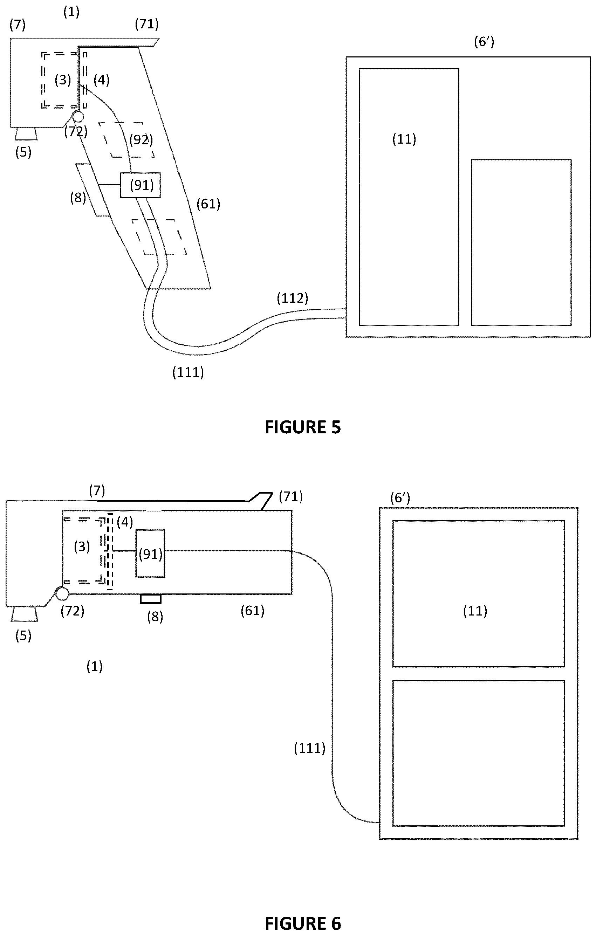

**Figures 5** and **6** represent embodiments corresponding to those represents in the previous figures, and wherein the apparatus (1) includes a first support structure (6) presenting an envelope casing (61) configured so that can be handheld, and further presents a second support structure (6') that presents a fluid supply source (11) provided in fluid connection with said first support structure (6) by means of a first fluid connection (111).

Said fluid supply source (11) preferentially comprises fluid storage means, preferentially thermally insulated storage a fluid previously provide at a temperature bigger than 80 °C.

Said fluid supply source (11) further comprises fluid pressurization means, preferentially without required energy supply from an external energy source. It is preferred when said fluid pressurization means are provided as a compressed gas, and adapted so that can supply a pressurized fluid at a pressure bigger than 5 bar.

As can be observed in the embodiments represented in **Figures 5** and **6**, according to a preferred embodiment, the apparatus (1) further presents a distribution valve (91) disposed inside of said first support structure (6), between a first fluid connection (111) upstream and the fluid injection means (4) into said portion collection disposition (5), whereby said distribution valve (91) can be actuated by means of applying pressure upon an actuation element (8), for example with the pointing finger of the same hand holding said envelop casing (61), so that release the fluid passageway while said actuation element (8) remains actuated.

It is preferred when there is further provided a residues collection disposition (92), inside of said first support structure (6) - see **Figure 5**), adapted so that can collect liquid residues from the interior of said portion collection disposition (5), whereby said residues collection disposition (92) is provided in fluid connection downstream with a second fluid line (112) configured so that discharges outwards of said envelope casing (61) of said first support structure (6).

It is preferred when said second support structure (6'), comprising said fluid supply source (11), further presents transport means, adapted so as to provide respective transport on the back of an individual, for example in the manner of a backpack, or to provide its displacement by an individual, such as for example in manner of a vehicle.

## Claims

1. **Beverage preparation apparatus (1)** adapted for preparing beverages by means of supply of a pressurized fluid by a fluid supply source (11) so that flows through a single portion (2) of edible substance precursor of a beverage,
whereby said apparatus (1) comprises:
- a portion collection disposition (3) arranged downstream of a fluid injection disposition (4) provided stationary, and upstream of a beverage discharge disposition (5), and adapted for collection of said single portion (2) in an open position, and for beverage discharge into said beverage discharge disposition (5) in a closed position,
- a first support structure (6) provided stationary, presenting a first region, for example the posterior region or the base region, adapted for connection to said fluid supply source (11), and a second region, for example the frontal region, adapted for supporting said portion collection disposition (3);
- a closing disposition (7) comprising a closing element (71) presenting an elongated form with a free edge and provided such that can be swiveled around a reference swivel axis (72), between an open position in which releases passage for introduction of said single portion (2) into said portion collection disposition (3), and a closed position in which provides closing of said portion collection disposition (3) in a liquid-tight manner,
whereby said beverage discharge disposition (5) is provided in a joint disposition with said closing disposition (7), without intercalary transmission of movement between each other, so that the swiveling movement of said closing element (71) between respective initial and final positions, jointly provides the opening and closing movement of said portion collection disposition (3) and fluid connection thereof with said beverage discharge (5), and **characterized**
**in that** said first support structure (6) comprises a distribution valve (91) provided between a first fluid connection (111) upstream and the fluid injection means (4) to said portion collection disposition (3), whereby said distribution valve (91) can be actuated by means of pressure upon an actuation element (8), for example by means of the pointing finger of the hand holding said envelope casing (61), so that releases the passage of fluid while said actuation element (8) is actuated.

2. Apparatus (1) according to claim 1, **characterized in that** said portion collection disposition (3) presents a general cup-like or similar shape, with collection opening and interior collection space adapted for collection of single portions (2) in adjusted manner to the shape and dimension thereof, and **in that** said collection portion disposition (3) is adapted so that when in a respective closed position, is confined upstream by a stationary top wall that presents said fluid injection disposition (4) that is provided in fluid connection with said fluid supply source (11) upstream, and is confined downstream by a base wall that presents beverage discharge means provided in fluid connection with said beverage discharge disposition (5).

3. Apparatus (1) according to claim 1 or 2, **characterized in that** said closing element (71) is provided in a joint construction, without movement transmission elements, preferentially in a single piece, with said portion collection disposition (3), so that if said portion collection disposition (3) is in an open position, the respective opening for collection of single portion (2) is oriented substantially upwards.

4. Apparatus (1) according to claims 1 or 2, **characterized in that** said closing element (71) is provided in a joint disposition, without movement transmission elements, preferentially in a single piece, with said beverage discharge disposition (5), whereby said reference swivel axis (72) is disposed on a region upstream of said beverage discharge disposition (5), or at a similar height of said beverage discharge disposition (5).

5. Apparatus (1) according to any one of claims 1 to 4, **characterized in that** said closing element (71) is provided so that said respective free edge is oriented backwards and that can be moved around a reference swivel axis (72) disposed in a frontal region and below the top region of said first support structure (6), so that said closing disposition (7) can be opened by a corresponding swiveling movement of said closing element (71) from a substantially horizontal direction and oriented backwards, corresponding to the closed position, to a substantially vertical direction and oriented upwards in a frontal region of said first support structure (6), corresponding to the open position, and can be closed by means of a reverse movement.

6. Apparatus (1) according to any one of claims 1 to 5, **characterized in that** said reference swivel axis (72) is arranged below a top region of said first support structure (6), so that said closing element (71) can be swiveled around said reference swivel axis (72) from a top region of said first support structure (6) to a frontal region thereof.

7. Apparatus (1) according to any one of claims 1 to 5, **characterized in that** said reference swivel axis (72) is arranged below the level of said portion collection disposition (3) in said first support structure (6), so that the free edge of said closing element (71) can be swiveled by an angle smaller than 100°, preferentially of at least approximately 90°, around said reference swivel axis (72), from a posterior region of said first support structure (6) to a frontal region thereof.

8. Apparatus (1) according to any one of claims 1 a 7, **characterized in that** said first support structure (6) presents an envelope casing (61), whereby said closing element (71) is configured so that, in the closed position, results adjacent to the top region of said envelope casing (61) or at least partially embedded therein, and
**in that** said closing element (71) is configured so that, in the closed position, extends along at least most part, preferentially the entire top region of envelope casing (61) of said first support structure (6), whereby it is particularly preferred when the free edge of said closing element (71) projects in at least one of above and beyond the top region of envelope casing (61), so that provides a detached surface for manual actuation thereof.

9. Apparatus (1) according to any one of claims 1 to 8, **characterized in that** said apparatus (1) further presents a second support structure (6') adapted at least for fluid storage and provided in fluid connection with said first support structure (6).

10. Apparatus (1) according to any one of previous claims 1 to 9, **characterized in that in that** said first support structure (6) presents an envelope casing (61) adapted so that can be handheld, preferentially configured with a general shape bottle, recipient, handle-like or similar.

11. Apparatus (1) according to any one of previous claims, **characterized in that** said first support structure (6) comprises a residues collection disposition (92) adapted so that can collect liquid residues from inside of said portion collection disposition (3), whereby said residues collection disposition (92) is provided in fluid connection downstream with a second fluid connection (112) configured so that discharges out of said envelope casing (61) of said first support structure (6).

12. Apparatus according to any one of previous claims, **characterized in that** said fluid supply source (11) is provided in a second support structure (6') that is remote and can be put in fluid communication with said first support structure and said portion collection disposition (3) by means of said first and second fluid lines (111, 112).

13. **Process** for distribution of a beverage, that includes the steps:
- providing a beverage preparation apparatus (1) according to any one of claims 1 to 12:
- actuating a closing disposition (7) so that the portion collection disposition (3) evolves from a closed position to an opened position;
- introducing a single portion (2) in the portion collection disposition (3);
- actuating a closed disposition (7) so that the portion collection disposition (3) evolves from an open to a closed position;
- actuating an actuation device so that there is initiated the injection of pressurized fluid in said portion collection disposition (3);
- discharging a beverage through the discharge disposition (5);
**characterized in that** the actuation of said closing disposition (7) results in a swiveling movement of said discharge disposition (5) from a substantially vertical orientation, corresponding to the position of closed portion collection disposition (3), to a substantially horizontal orientation, corresponding to the open position of portion collection disposition (3), in a frontal region of said apparatus (1), and vice-versa.

14. Process according to claim 13, **characterized in that** said swivel movement of said portion collection disposition (3) unfolds simultaneously, preferentially in solidary manner and without intercalary movement transmission means, with the drive of said discharge disposition (5).

15. Process according to claims 13 or 14, **characterized in that** said step of actuation of an actuation device so that initiates the injection of pressurized fluid in said portion collection disposition (3), does not require energy supply from a source external to said apparatus (1).

## Patentansprüche

1. **Getränkezubereitungsgerät (1)** geeignet für Zubereitung von Getränke mittels Versorgung einer Flüssigkeit unter Druck mittels einer Flüssigkeitsversorgungsquelle (11), so um durch eine Einzelmenge (2) eines Getränkevorläufers von essbarer Substanz zu fließen, wobei genanntes Gerät (1) umfasst:
- eine Mengensammlungseinrichtung (3) angeordnet stromabwärts einer Flüssigkeitseinspritzeinrichtung (4) standfest bereitgestellt und stromaufwärts einer Getränkeentladungseinrichtung (5) und geeignet für Sammlung von genannter Einzelmenge (2) in einer offenen Position und zur Getränkeentladung in genannte Getränkeentladungseinrichtung (5) in einer geschlossenen Position.
- eine erste Stützstruktur (6) standfest bereitgestellt aufweisend ein erstes Bereich, z.Bsp. das Vorderbereich oder Basisbereich geeignet für Verbindung zu genannter Flüssigkeitsversorgungsquelle (11), und ein zweites Bereich, z.Bsp. das Vorderbereich geeignet für Stützung von genannter Mengensammlungseinrichtung (3);
- eine Verschlusseinrichtung (7) umfassend ein Verschlusselement (71) aufweisend eine längliche Form mit einer freien Kante und so bereitgestellt, um um eine Referenzschwenkachse (72) herum zu schwenken, zwischen einer offenen Position, in der der Durchgang für die Einführung von genannter Einzelmenge (2) in genannte Mengensammlungseinrichtung (3) freigibt, und einer geschlossenen Position, in der der Verschluss von genannter Mengensammlungseinrichtung (3) flüssigkeitsdicht bereitstellt,
wobei genannte Getränkeentladungseinrichtung (5) in einer Fugeneinrichtung mit genannter geschlossenen Einrichtung (7) bereitgestellt ist, ohne wechsellagender Übertragung der Bewegung unter einander, so dass die Schwenkbewegung von genanntem geschlossenen Element (71) zwischen entsprechende Anfangs- und Endpositionen die Öffnungs- und Verschlussbewegung von genannter Mengensammlungseinrichtung (3) und Flüssigkeitsverbindung davon mit genannter Getränkeentladungseinrichtung (5) verbindend bereitstellt, und
**dadurch gekennzeichnet,**
**dass** genannte erste Stützstruktur (6) ein Verteilungsventil (91) umfasst bereitgestellt zwischen einer ersten Flüssigkeitsverbindung (111) stromaufwärts und dem Flüssigkeitseinspritzmittel (4) zu genannter Mengensammlungseinrichtung (3), wobei genanntes Verteilungsventil (91) mittels Druck an einem Betätigungselement (8) kann betätigt werden, z.Bsp. mittels Zeigefinger der Hand, die genanntes Umschlaggerät (61) so hält, dass der Flüssigkeitsdurchgang freigibt, während genanntes Betätigungselement (8) betätigt wird.

2. Gerät (1) gemäß Anspruch 1 **dadurch gekennzeichnet, dass** genannte Mengensammlungseinrichtung (3) allgemein becherartigen oder ähnlichen Form aufweist, mit Sammlungsöffnung und Innensammlungsraum geeignet für Sammlung von Einzelmengen (2) angepasst der Form und Dimension davon, und dass genannte Mengensammlungseinrichtung (3) so angepasst ist, wenn in einer entsprechend geschlossenen Position, dass sie durch eine feststehende obere Wand stromaufwärts begrenzt ist, welche eine Flüssigkeitseinspritzeinrichtung (4) aufweist, bereitgestellt in einer Flüssigkeitsversorgungsquelle (11) stromabwärts, und durch eine Grundwand begrenzt, die Getränkeentladungsmittel aufweist bereitgestellt in flüssiger Verbindung mit genannter Getränkeentladungseinrichtung (5).

3. Gerät (1) gemäß Anspruch 1 oder 2 **dadurch gekennzeichnet, dass** genanntes Verschlusselement (71) in einer Fugenanlage bereitgestellt ist, ohne Bewegungsübertragungselemente, vorzugsweise in einem Einzelstück, mit genannter Mengensammlungseinrichtung (3), wenn genannte Mengensammlungseinrichtung (3) in einer offenen Position ist, so dass die entsprechende Öffnung einer Einzelmenge (2) wesentlich aufwärts gerichtet ist.

4. Gerät (1) gemäß Anspruch 1 oder 2 **dadurch gekennzeichnet, dass** genanntes Verschlusselement (71) in einer Fugeneinrichtung bereitgestellt ist, ohne Bewegungsübertragungselemente, vorzugsweise in einem Einzelstück, mit genannter Getränkeentladungseinrichtung (5), wobei genannte Referenzschwenkachse (72) auf einem Bereich stromaufwärts von genannter Getränkeentladungseinrichtung (5) oder bei ähnlicher Höhe von genannter Getränkeentladungseinrichtung (5) angeordnet ist.

5. Gerät (1) gemäß einer der Ansprüche 1 bis 4 **dadurch gekennzeichnet, dass** genanntes Verschlusselement (71) so bereitgestellt ist, dass genannte freie Kante rückwärts gerichtet ist und um eine Referenzschwenkachse (72) herum geschwenkt zu werden, angeordnet in einem Frontalbereich und unterhalb des oberen Bereiches von genannter ersten Stützstruktur (6) so, dass genannte Verschlusseinrichtung (7) mittels einer entsprechenden Schwenkbewegung von genanntem Verschlusselement (71) aus einer wesentlich waagerechten Richtung kann geöffnet werden und gerichtet rückwärts, entsprechend der geschlossenen Position, zu einer wesentlich senkrechten Richtung und gerichtet aufwärts in einem Frontalbereich einer ersten Stützstruktur (6), entsprechend einer offenen Position, und kann geschlossen werden mittels einer Rückbewegung.

6. Gerät (1) gemäß einer der Ansprüche 1 bis 5 **dadurch gekennzeichnet, dass** genannte Referenzschwenkachse (72) unterhalb eines oberen Bereiches von genannter ersten Stützstruktur (6) so angeordnet ist, dass genanntes Verschlusselement (71) um genannte Referenzschwenkachse (72) herum aus einem oberen Bereich von genannter ersten Stützstruktur (6) zu einem Frontalbereich davon kann geschwenkt werden.

7. Gerät (1) gemäß einer der Ansprüche 1 bis 5 **dadurch gekennzeichnet, dass** genannte Referenzschwenkachse (72) unterhalb der Ebene von genannter Mengensammlungseinrichtung (3) in genannte ersten Stützstruktur (6) so angeordnet ist, dass die freie Kante von genanntem Verschlusselement (71) mittels eines Winkels kleiner als 100° kann geschwenkt werden, vorzugsweise von mindestens ungefähr 90°, um genannte Referenzschwenkachse (72) herum, aus einem hinteren Bereich von genannter ersten Stützstruktur (6) zu einem Frontalbereich davon.

8. Gerät (1) gemäß einer der Ansprüche 1 bis 7 **dadurch gekennzeichnet, dass** genannte erste Stützstruktur (6) ein Umschlaggehäuse (61) aufweist, wobei genanntes Verschlusselement (71) so gestaltet ist, dass es in einer geschlossenen Position neben dem oberen Bereich von genanntem Umschlaggehäuse (61) führt oder mindestens teils darin eingebettet davon und
dass genanntes Verschlusselement (71) so festgelegt ist, um in der geschlossenen Position entlang mindestens meistenteils, vorzugsweise des ganzen oberen Bereiches des Umschlaggerätes (61) von genannter Stützstruktur (6) zu verlängern, wobei besonders bevorzugt ist, wenn die freie Kante von genanntem Verschlusselement (71) mindestens in einem oberhalb und außerhalb des oberen Bereiches des Umschlaggerätes (61) so spiegelt, dass eine abgetrennte Oberfläche zur manuellen Betätigung davon bereitstellt.

9. Gerät (1) gemäß einer der Ansprüche 1 bis 8 **dadurch gekennzeichnet, dass** genanntes Gerät (1) weiterhin eine zweite Stützstruktur (6') aufweist, mindestens geeignet für Flüssigkeitsspeicherung und bereitgestellt in flüssiger Verbindung mit genannter ersten Stützstruktur (6).

10. Gerät (1) gemäß einer der vorigen Ansprüche 1 bis 9 **dadurch gekennzeichnet, dass** genannte erste Stützstruktur (6) ein Umschlaggerät (61) aufweist so angepasst, um handgeführt zu werden, vorzugsweise gestaltet mit einer allgemeinen Formflasche, Behälter, henkelartig oder ähnlich.

11. Gerät (1) gemäß einer der vorigen Ansprüche **dadurch gekennzeichnet, dass** genannte erste Stützstruktur (6) eine Reststoffsammeleinrichtung (92) so angepasst, um flüssigen Reststoff von innerhalb der genannten Mengensammlungseinrichtung (3) zu sammeln, wobei genannte Reststoffsammeleinrichtung (92) in flüssiger Verbindung mit einer zweiten Flüssigkeitsverbindung (112) so bereitgestellt ist, um aus genanntem Umschlaggerät (61) von genannter Stützstruktur (6) zu entladen.

12. Gerät gemäß einer der vorigen Ansprüche **dadurch gekennzeichnet, dass** genannte Flüssigkeitsversorgungsquelle (11) in einer entfernten zweiten Stützstruktur (6') bereitgestellt ist und in flüssiger Datenübertragung mit genannter ersten Stützstruktur und genannter Mengensammlungseinrichtung (3) gestellt werden mittels genannter ersten und zweiten Flüssigkeitsbahnen (111, 112).

13. **Verfahren** zur Getränkeverteilung, dass es folgende Schritte umfasst:
- Bereitstellung eines Getränkezubereitungsgerät (1) gemäß einer der Ansprüche 1 bis 12;
- Tätigung einer Verschlusseinrichtung (7), so dass die Mengensammlungseinrichtung (3) aus einer geschlossenen in eine offenen Position entsteht;
- Einführung einer Einzelmenge (2) in die Mengensammlungseinrichtung (3);
- Tätigung einer Verschlusseinrichtung (7), so dass die Mengensammlungseinrichtung (3) aus einer offenen in eine geschlossene Position entsteht;
- Tätigung eines Tätigungsgerätes, so dass dort die Einspritzung von Druckflüssigkeit in genannte Mengensammlungseinrichtung (3) eingeleitet wird;
- Entladung eines Getränkes durch die Entladungseinrichtung (5) ;
wobei die Tätigung von genannter Verschlusseinrichtung (7) zu einer Schwenkbewegung von genannter Entladungseinrichtung (5) aus einer wesentlich senkrechten Richtung, übereinstimmend mit der Position der geschlossenen Mengensammlungseinrichtung (3), zu einer wesentlich waagerechten Richtung, übereinstimmend mit der offenen Position der Mengensammlungseinrichtung (3), in einem Frontalbereich von genanntem Gerät (1), und umgekehrt.

14. Verfahren gemäß Anspruch 13 **dadurch gekennzeichnet, dass** genannte Schwenkbewegung von genannter Mengensammlungseinrichtung (3) zeitgleich, vorzugsweise einzeln und ohne wechselndes Bewegungsübertragungsmittel, mit dem Antrieb von genannter Entladungseinrichtung (5) entfaltet.

15. Verfahren gemäß Ansprüche 13 oder 14 **dadurch gekennzeichnet, dass** in genanntem Tätigungsschritt eines Tätigungsgerätes keine Stromversorgung aus einer Quelle außerhalb genanntem Gerät (1) benötigt, so um die Einspritzung von Druckflüssigkeit in genannte Mengensammlungseinrichtung (3) einzuleiten.

## Revendications

1. **Appareil de préparation de breuvage** (1) adapté à la préparation de breuvages au moyen de la fourniture d'un fluide pressurisé par une source de fourniture de fluide (11) afin qu'il circule à travers une seule portion (2) d'un précurseur de substance comestible du breuvage, où ledit appareil (1) comprend :
- une disposition de collecte de portion (3) arrangée en aval d'une disposition d'injection de fluide (4) fournie stationnaire et, en amont d'une disposition de décharge de breuvage (5) et adaptée à la collecte de ladite portion unique (2) dans une position ouverte et pour la décharge de breuvage dans ladite disposition de décharge de breuvage (5) dans une position fermée,
- une première structure de support (6) fournie stationnaire, présentant une première région, par exemple la région postérieure ou la région de base, adaptée à la connexion à ladite source de fourniture de fluide (11) et une seconde région, par exemple la région frontale, adaptée au support de ladite disposition de collecte de portion (3) ;
- une disposition de fermeture (7) comprenant un élément de fermeture (71) présentant une forme allongée avec un rebord libre et fourni de manière à ce qu'il pivote autour d'un axe de pivotement de référence (72), entre une position ouverte dans laquelle est libéré un passage pour l'introduction de ladite portion unique (2) dans ladite disposition de collecte de portion (3) et une position fermée dans laquelle est fournie la fermeture de ladite disposition de collecte de portion (3) sous forme étanche aux liquides,
où ladite disposition de décharge de breuvage (5) est fournie en disposition jointe avec ladite disposition de fermeture (7) sans transmission intercalaire du mouvement entre chacun afin que le mouvement de pivotement dudit élément de fermeture (71) entre les respectives positions initiale et finale, conjointement fournisse un mouvement d'ouverture et de fermeture de ladite disposition de collecte de portion (3) et une connexion de fluide de celle-ci avec ladite décharge de breuvage (5), et
**caractérisée**
**par le fait que** la première structure de support (6) comprend une valve de distribution (91) fournie entre une première connexion de fluide (111) en amont et les moyens d'injection de fluide (4) vers ladite disposition de collecte de portion (3), où ladite valve de distribution (91) peut être actionnée au moyen d'une pression sur l'élément d'actionnement (8), par exemple au moyen de l'indicateur de la main maintenant ledit boîtier enveloppe (61) afin que cela libère le passage du fluide alors que ledit élément d'actionnement (8) est actionné.

2. Appareil (1) selon la revendication 1, **caractérisé par le fait que** ladite disposition de collecte de portion (3) présente une forme générale de type tasse ou similaire, avec une ouverture de collecte et un espace de collecte intérieur adapté à la collecte de portions uniques (2) sous une forme ajustée à la forme et à la dimension de celle-ci, et **par le fait que** ladite disposition de portion de collecte (3) est adaptée afin que dans une position fermée respective, elle soit confinée en amont par un mur supérieur stationnaire qui présente ladite disposition d'injection de fluide (4) fournie par une connexion de fluide avec ladite source de fourniture de fluide (11) en amont, ainsi que confinée en aval par un mur de base qui présente des moyens de décharge de breuvage fournis par une connexion de fluide avec ladite position de décharge de breuvage (5).

3. Appareil (1) selon la revendication 1 ou 2, **caractérisé par le fait que** ledit élément de fermeture (71) est fourni dans une construction jointe, sans éléments de transmission de mouvement, de préférence en une seule pièce, avec ladite disposition de collecte de portion (3), afin que, si ladite disposition de collecte de portion (3) est en position ouverte, l'ouverture respective pour la collecte d'une seule portion (2) soit substantiellement orientée vers le haut.

4. Appareil (1) selon la revendication 1 ou 2, **caractérisée par le fait que** l'élément de fermeture (71) est fourni dans une disposition jointe, sans éléments de transmission de mouvement, de préférence en une seule pièce, avec la disposition de décharge de breuvage (5), où ledit axe de pivotement de référence (72) est disposé dans une région en amont de ladite disposition de décharge de breuvage (5) ou à une hauteur similaire de ladite disposition de décharge de breuvage (5).

5. Appareil (1) selon une quelconque revendication entre 1 et 4, **caractérisé par le fait que** ledit élément de fermeture (71) est fourni afin que ledit rebord libre respectif soit orienté en arrière et qu'il puisse être déplacé autour d'un axe de pivotement de référence (72) disposé dans une région frontale et en dessous de la région supérieure de ladite première structure de support (6) afin que ladite disposition de fermeture (7) puisse être ouverte par un mouvement de pivotement correspondant dudit élément de fermeture (71) à partir d'une direction substantiellement horizontale et orientée en arrière, correspondant à la position fermée, vers une direction substantiellement verticale et orientée vers le haut dans une région frontale de ladite première structure de support (6), correspondant à la position ouverte, et pouvant être fermée au moyen d'un mouvement inverse.

6. Appareil (1) selon une quelconque revendication entre 1 et 5, **caractérisé par le fait que** ledit axe de pivotement de référence (72) est arrangé en dessous d'une région supérieure de ladite première structure de support (6) afin que ledit élément de fermeture (71) puisse pivoter autour dudit axe de pivotement de référence (72) à partir d'une région supérieure de ladite première structure de support (6) vers une région frontale de celle-ci.

7. Appareil (1) selon une quelconque revendication entre 1 et 5, **caractérisé par le fait que** ledit axe de pivotement de référence (72) est arrangé en dessous du niveau de ladite disposition de collecte de portion (3) dans ladite première structure de support (6) afin que le rebord libre dudit élément de fermeture (71) puisse pivoter sur un angle plus petit que 100°, de préférence d'au moins 90° approximativement, autour dudit axe de pivotement de référence (72), à partir de la région postérieure de ladite première structure de support (6) vers une région frontale de celle-ci.

8. Appareil (1) selon une quelconque revendication entre 1 et 7, **caractérisé par le fait que** ladite première structure de support (6) présente un boîtier enveloppe (61), où ledit élément de fermeture (71) est configuré afin que sur la position fermée, il finisse adjacent à la région supérieure dudit boîtier enveloppe (61) ou au moins partiellement incorporée à celle-ci, et
**par le fait que** ledit élément de fermeture (71) est configuré de telle sorte qu'en position fermée, il s'étend le long d'au moins la plupart, de préférence dans toute région supérieure du boîtier enveloppe (61) de ladite première structure de support (6), où est particulièrement privilégié qu'un rebord libre dudit élément de fermeture (71) se projette au moins dans l'un des éléments susmentionnés et au-delà de la région supérieure du boîtier enveloppe (61), afin qu'il fournisse une surface détachée pour un actionnement manuel de celui-ci.

9. Appareil (1) selon une quelconque revendication entre 1 et 8, **caractérisé par le fait que** ledit appareil (1) présente en outre une seconde structure de support (6') adaptée au moins au stockage de fluide et fournie avec une connexion du fluide avec ladite première structure de support (6).

10. Appareil (1) selon une quelconque revendication précédente entre 1 et 9, **caractérisé par le fait que** la première structure de support (6) présente un boîtier enveloppe (61) adapté afin qu'il soit tenu à la main, de préférence configuré en récipient en une forme générale de bouteille, avec un type de poignée ou similaire.

11. Appareil (1) selon une quelconque revendication précédente, **caractérisé par le fait que** ladite première structure de support (6) comprend une disposition de collecte de résidus (92) adaptée afin qu'elle puisse collecter des résidus liquides à partir de l'intérieur de ladite disposition de collecte de portion (3), où ladite disposition de collecte de résidus (92) est fournie par une connexion de fluide en aval avec une seconde connexion de fluide (112) configurée afin qu'elle éjecte ledit boîtier enveloppe (61) de ladite première structure de support (6).

12. Appareil selon une quelconque revendication précédente, **caractérisée par le fait que** la source de fourniture de fluide (11) est fournie dans une seconde structure de support (6') qui se trouve à distance et qui peut être placée en communication de fluide avec ladite première structure de support et ladite disposition de collecte de portion (3), au moyen des dites, première et seconde, lignes de fluide (111, 112) .

13. **Processus** de distribution d'un breuvage, qui inclut les étapes suivantes :
- fourniture d'un appareil de préparation de breuvage (1) selon une quelconque revendication entre 1 et 12 :
- actionnement d'une disposition de fermeture (7) afin que la disposition de collecte de portion (3) évolue d'une position fermée vers une position ouverte ;
- introduction d'une seule portion (2) dans la disposition de collecte de portion (3) ;
- actionnement d'une disposition fermée (7) afin que la disposition de collecte de portion (3) évolue d'une position ouverte vers une position fermée ;
- actionnement d'un dispositif d'actionnement afin que soit initiée l'injection de fluide pressurisé dans ladite disposition de collecte de portion (3) ;
- déchargement d'un breuvage à travers la disposition de décharge (5) ;
**caractérisé par le fait que** l'actionnement de ladite disposition de fermeture (7) donne lieu à un mouvement de pivotement de ladite disposition de décharge (5) à partir d'une orientation substantiellement verticale, correspondant à la position de la disposition de collecte de portion fermée (3), vers une orientation substantiellement horizontale, correspondant à une position ouverte de la disposition de collecte de portion (3) dans une région frontale dudit appareil (1), et vice-versa.

14. Processus selon la revendication 13, **caractérisé par le fait que** ledit mouvement de pivotement de ladite disposition de collecte de portion (3), se déploie simultanément, de préférence de manière solidaire et sans moyens de transmission de mouvement intercalaire, avec l'entraînement de ladite disposition de décharge (5).

15. Processus selon la revendication 13 ou 14, **caractérisé par le fait que** ladite étape de l'actionnement d'un dispositif d'actionnement qui débute l'injection du fluide pressurisé dans ladite disposition de collecte de portion (3), ne requiert aucune alimentation électrique d'une source externe dudit appareil (1).
